(19) Europäisches Patentamt
European Patent Office
Office européen des brevets

(11) Publication number: 0 417 912 B1

(12) # EUROPEAN PATENT SPECIFICATION

(45) Date of publication of patent specification: **09.11.94**

(51) Int. Cl.$^5$: **C08L 53/00**, //C08J3/20, (C08L53/00,69:00)

(21) Application number: **90308909.2**

(22) Date of filing: **14.08.90**

The file contains technical information submitted after the application was filed and not included in this specification

(54) **Thermoplastic resin-based molding composition.**

(30) Priority: **25.08.89 JP 218846/89**
**28.12.89 JP 338565/89**
**19.03.90 JP 66829/90**

(43) Date of publication of application:
**20.03.91 Bulletin 91/12**

(45) Publication of the grant of the patent:
**09.11.94 Bulletin 94/45**

(84) Designated Contracting States:
**DE FR GB IT SE**

(56) References cited:
**CA-A- 705 481**
**DE-A- 2 350 645**
**US-A- 3 028 365**
**US-A- 3 929 937**
**US-A- 4 670 508**

**WORLD PATENTS INDEX LATEST Derwent Publications Ltd., London, GB; AN 85-028508 ; & JP-A-59223741**

(73) Proprietor: **IDEMITSU PETROCHEMICAL COMPANY LIMITED**
**1-1, Marunouchi 3-chome,**
**Chiyoda-ku**
**Tokyo-to (JP)**

(72) Inventor: **Tomomatsu, Ryuzo**
**216, Imazuasayama**
**Ichihara-shi, Chiba-ken (JP)**
Inventor: **Sato, Koji**
**5-1, Aobadai 1-chome**
**Ichihara-shi, Chiba-ken (JP)**
Inventor: **Nakagawa, Takayuki**
**21-8, Funabashi 3-chome**
**Setagaya-ku, Tokyo-to (JP)**

(74) Representative: **Baverstock, Michael George Douglas et al**
**BOULT, WADE & TENNANT**
**27 Furnival Street**
**London, EC4A 1PO (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

The present invention relates to a thermoplastic resin-based molding composition or, more particularly, to a polyolefin resin-based molding composition capable of giving molded articles having excellent appearance and various mechanical properties such as rigidity at high temperatures, dimensional accuracy of molding, resistance against whitening by scratches, yielding characteristics, and HDT (heat distortion temperature) so as to be useful as a molding material of various parts in automobiles, household electric appliances, information-processing equipment for office use.

As is well known, polyolefin resins in general are widely employed as a molding material in the above mentioned application fields or as a material of films. One of the limiting factors against the application of polyolefin resins, however, is the relatively poor rigidity of the resin, in particular, at an elevated temperature.

Various attempts and proposals have been made hitherto in order to enhance the rigidity of a molded article of a polyolefin resin including a method of compounding the resin with a large amount of an inorganic filler such as calcium carbonate, talc, mica, asbestos, diatomaceous earth, glass fibers, or a method of blending the polyolefin resin with a polycarbonate resin.

The former method of compounding the resin with an inorganic filler is indeed effective in enhancing the rigidity of the shaped articles of the resin but several disadvantages are caused thereby such as an increase in the specific gravity of the shaped article, appearance of flow marks and silver streaks on the outer surface thereof so that the method is not applicable when the shaped article should desirably have a low specific gravity or is desired to have attractive outer appearance.

In connection with the latter method of polymer blending with a polycarbonate resin, on the other hand, it is taught in Japanese Patent Kokai 59-223741 that a polypropylene resin is blended with a polycarbonate resin of the 4,4'-dihydroxy diphenyl alkane type in a molten state so that the polypropylene resin can be imparted with improved mechanical properties including rigidity at an elevated temperature. Although this method is indeed effective at least to some extent, several problems are unavoidable in the melt-binding of the resins due to the inherently poor compatability of these two resins resulting in eventual delamination or separation into layers, in particular, in articles shaped by injection molding, so as to cause a degradation not only in the outer appearance but also in the mechanical properties of the shaped articles.

A remedial method for the above mentioned problem is proposed in Japanese Patent Kokai 59-223742 according to which the polypropylene resin per se to be melt-blended with a polycarbonate resin is a resin modified with an unsaturated carboxylic acid. This method, however, is not completely effective in improving the compatability of the two different resins with the chemical interaction hardly taking place between the polycarbonate resin and the modified polypropylene resin leaving the above mentioned problem at least partly unsolved since the molecular chain terminals of a polycarbonate resin are usually blocked with a chain-end stopper or a molecular weight-controlling agent.

US-A-3 929 937 describes a composition comprising a thermoplastic polymer such as polyethylene in a matrix of a biodegradable thermoplastic oxyalkanoyl polymer for use in making biodegradable shaped articles.

CA-A-705 481 describes compositions comprising blends of from 80% to 99.5% by weight of polypropylene and from 0.5 to 20% by weight of a thermoplastic polyaryl carbonate polymer.

Further, attempts have been made in order to solve the above mentioned problems by compounding a thermoplastic resin with a powder of a different resin as a kind of filler. It is common, however, for the thus prepared resin composition to have rather poor yielding characteristics as compared with those of the base resin alone. This problem presents a great drawback against industrial development of organic-inorganic resinous composite materials.

The present invention provides, by solving the above mentioned problems in the prior art, a novel and improved thermoplastic resin-based molding composition or, in particular, a polyolefin resin-based binary molding composition comprising a polyolefin resin and a polycarbonate resin and capable of giving shaped articles having excellent outer appearance and mechanical properties without the risk of eventual occurrence of delamination or separation into layers.

The thermoplastic resin-based molding composition of the invention comprises, as a blend: (A) from 50 to 99 parts by weight of a block copolymer of ethylene and propylene of which the content of the ethylene moiety does not exceed 20% by weight; and (B) from 50 to 1 part by weight of a polycarbonate resin, the ethylene-propylene block copolymer forming the matrix phase of the blend and the polycarbonate resin forming a phase dispersed in the matrix of the ethylene-propylene block copolymer in the form of discrete particles having an average particle diameter in the range from 0.1 to 1000 µm.

It is preferable that the particles of the component (B) have an average aspect ratio in the range from 1.0 to 10.0 or, more preferably, from 1.3 to 7.0.

As is described above, the resin composition of the present invention is characterized by the discrete dispersion of particles of the component (B) having a specified average particle diameter in the matrix of the component (A) in a specified weight proportion. By this means, the desired improvement in the properties of the resin composition can be well achieved disregarding the problem of compatibility between the components (A) and (B) compounded together.

Particularly preferable as the component (A) is a powdery block copolymer of propylene and ethylene of which the content of the ethylene moiety does not exceed 20% by weight. The propylene-based block copolymer should preferably have a melt index of 0.05 to 4 g/10 minutes for a resin composition of the blow-molding grade and 3 to 60 g/10 minutes for a resin composition of the injection-molding grade.

Various types of polycarbonate resins can be used as the component (B) including aliphatic polycarbonate resins, aromatic polycarbonate resins and modified products thereof. Particular examples of the aromatic polycarbonate resin include those formed, at least partly, by the recurrence of the unit represented by the general formula

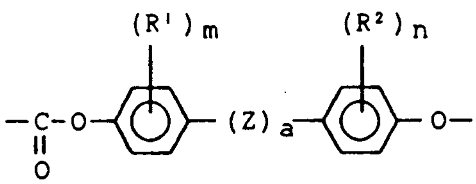

, ...... (I)

in which Z is a divalent atom or group selected from the class consisting of an oxygen atom, alkylene groups having 1 to 8 carbon atoms, alkylidene groups having 2 to 8 carbon atoms, cycloalkylene groups having 5 to 15 carbon atoms, cycloalkylidene groups having 5 to 15 carbon atoms, sulfonyl group, sulfoxide group, carbonyl group, sulfide group and a group expressed by the formula $-CMe_2-Pn-CMe_2-$, Me being a methyl group and Pn being a 1,4-phenylene group, the subscript a is zero or 1, $R^1$ and $R^2$ are each, independently from the others, a hydrogen atom, halogen atom or alkyl group having 1 to 8 carbon atoms and the subscripts m and n are each, independently from the other, a positive integer of 1 to 4.

These polycarbonate resins can be prepared in a well known procedure using a solvent such as methylene chloride by the reaction of a dihydric phenol and a carbonate precursor such as phosgen in the presence of a known acid acceptor and a molecular-weight controlling agent or by the ester-exchange reaction between a dihydric phenol and a carbonate precursor such as diphenyl carbonate.

The above mentioned dihydric phenol is exemplified by 2,2-bis(4-hydroxyphenyl) propane or bisphenol A, 2,2-bis(3-methyl-4-hydroxyphenyl) propane, 2,2-bis(3,5-dimethyl-4-hydroxyphenyl) propane, 1,2-bis(4-hydroxyphenyl) ethane, 3,3-bis(4-hydroxyphenyl) pentane, 1,1-bis(4-hydroxyphenyl) cyclohexane, 4,4′-dihydroxy diphenyl, bis(4-hydroxyphenyl) sulfide, bis(4-hydroxyphenyl) sulfone, bis(4-hydroxyphenyl) sulfoxide, bis(4-hydroxyphenyl) ether, 4,4′-dihydroxy benzophenone as well as halogenated bisphenol compounds such as 2,2-bis(3,5-dibromo-4-hydroxyphenyl) propane, 2,2-bis(3,5-dichloro-4-hydroxyphenyl) propane, 2,2-bis(3-chloro-4-hydroxyphenyl) propane, 2,2-bis(3-bromo-4-hydroxyphenyl) propane, of which the first mentioned bisphenol A is particularly preferable. These dihydric phenol compounds can be used either singly or as a combination of two kinds or more according to need. Further, the polycarbonate resin as the component (B) can be a thermoplastic random-branched polycarbonate obtained by the combined use of a polyfunctional aromatic compound with the above mentioned dihydric phenol compound or can be a polymer blend of two kinds or more of polycarbonate resins of different types. The polycarbonate resin should preferably have a viscosity-average molecular weight in the range from 10,000 to 100,000 or, more preferably, from 20,000 to 100,000 in view of the effect of imparting a high mechanical strength to the shaped articles of the inventive resin composition.

It is further preferable to use a polycarbonate resin having crystallinity in view of the higher melting point of the resin than that of amorphous ones. Namely, the inventive resin composition comprising a crystalline polycarbonate resin can be shaped by molding without causing melting or deformation of the polycarbonate resin particles dispersed in the matrix at a relatively high molding temperature as compared with a molding composition compounded with particles of an amorphous polycarbonate resin of which the shaped articles may eventually be subject to a decrease in the HDT (heat-distortion temperature) or yield strength or occurrence of delamination.

The inventive molding resin composition can be prepared by compounding, at a temperature such as not to cause melting of the component (B), the above described components (A) and (B) in such a proportion that the weight ratio of the component (A) to the component (B) is in the range of from 50:50 to 99:1 or, preferably, from 55:45 to 95:5 or, more preferably, from 65:35 to 90:10. When the weight proportion of the component (B) is too small, the desired effect of improving the rigidity of shaped articles at elevated temperatures cannot be fully exhibited as a matter of course. When the weight proportion of the component (B) is too large, on the other hand, the flowability of the resin composition may be impaired, together with a decrease in the impact strength of articles shaped from the resin composition. The compounding work of the components (A) and (B) is conducted, preferably, at a temperature at which the component (B) is not melted but the component (A) is in a molten state to facilitate uniform blending of the components.

The most characteristic feature of the inventive molding resin composition is that the component (B) forms a discretely dispersed phase in a particulate form in the matrix of the component (A) as a consequence of the compounding work being conducted at a temperature low enough not to cause melting of the particles of the component (B). When the compounding work of the components is conducted at a temperature higher than the melting point of the component (B) or the resin composition is prepared by melt-blending of the components, the resin composition would give a shaped article which is eventually subject to the disadvantage of delamination, having poor outer appearance and poor mechanical properties.

The particles of the component (B) dispersed in the matrix of the inventive molding resin composition should have an average particle diameter in the range from 0.1 to 1000 μm or, preferably, from 0.1 to 300 μm or, more preferably, from 0.1 to 100 μm in order that the desired effect by the compounding of the component (B) can be fully exhibited. It is further preferable that the particles of the component (B) dispersed in the matrix of the component (A) have a number-average aspect ratio in the range from 1.0 to 10 or, more preferably, in the range from 1.3 to 7.

The molding resin composition of the present invention can optionally be compounded with various kinds of additives conventionally used in molding resin compositions according to need including, for example, inorganic fillers such as calcium carbonate, talc, mica, silica, asbestos, fibrous reinforcing agents such as glass fibers, carbon fibers, metal whiskers, antioxidants, ultraviolet absorbers, heat stabilizers, lubricants, flame retardants, antistatic agents each in a limited amount.

The inventive molding resin composition can be prepared by uniformly blending the above described essential components (A) and (B) and the optional additives each in a specified proportion. The blending machine used in this compounding work is not particularly limitative, including Henschel mixers, single-screw or double-screw extruder machines, Banbury mixers. The compounding work must be conducted at a controlled temperature sufficiently low not to cause melting of both of the components (A) and (B) or, preferably, at a temperature to cause melting of the component (A) but not to cause melting of the component (B) so that the particles of the component (B) in the matrix of the component (A) can retain their particle composition before compounding without being melted in the course of blending.

The inventive molding composition prepared in the above described manner can be molded by any conventional molding method including the extrusion molding method, injection molding method, blow molding method. In any case, it is essential that the molding work is conducted at a temperature to cause melting of the component (A) but not to cause melting of the component (B) dispersed in a particulate form in the matrix of the component (A) so that the particles of the component (B) can retain the particle configuration before compounding with the component (A) even in the shaped articles of the resin composition.

Apart from the above described problems relative to the mechanical properties or, in particular, rigidity of the shaped articles of a thermoplastic resin-based molding composition at an elevated temperature, these thermoplastic resin-based molding compositions have another problem in respect of the colored appearance of shaped articles produced by compounding with a coloring pigment. Specifically, it is usual for a thermoplastic resin-based molding composition to be compounded with a substantial amount of an inorganic filler with an object to improve the mechanical properties, dimensional stability, heat resistance of the shaped articles. When a shaped article of such a thermoplastic resin-based molding composition compounded with a substantial amount of an inorganic filler is desired to be colored by admixture of the molding composition with a pigment, sufficient coloration of the shaped article can be obtained only by greatly increasing the amount of the pigment due to the masking effect of the inorganic filler in reducing coloration by the pigment. In view of the increase in cost by increasing the amount of the relatively expensive pigment, it is highly desirable to develop a thermoplastic resin-based molding composition capable of giving a vividly colored shaped article having excellent dimensional stability and rigidity at an elevated temperature without compounding a large amount of an inorganic filler in which full coloration of the shaped article can be obtained with a relatively small amount of the compounded pigment.

In this regard, the present invention provides a solution for the above mentioned problem. When the thermoplastic resin-based molding composition composed of the above described components (A) and (B) according to the invention is compounded with a pigment with a view to coloration and the composition is molded into a shaped article, the thus obtained shaped article of the resin composition is imparted with full coloration even with a relatively small amount of pigment in addition to obtaining the great improvement in the mechanical properties in general as is described above.

The above mentioned improvement given by the present invention can be obtained with various kinds of organic and inorganic pigments without particular limitations. Examples of pigments usable in the invention include blue and green pigments such as phthalocyanine blue, phthalocyanine green, ultramarine, Prussian blue, red and orange pigments such as quinacridone red, alizarin lake, thioindigo bordeaux, naphthol red, perylene red, polyazo red, dianthraquinonyl red, diketopyrrolopyrrole, perinone orange, red iron oxide, yellow pigments such as isoindolinone yellow, quinophthalone yellow, polyazo yellow, Hansa Yellow, Titan Yellow, lemon chrome, chrome yellow, black pigments such as carbon black, anilin black, iron black, white pigments such as titanium dioxide. Two kinds or more of these pigments may be used in combination according to need. The amount of the pigment admixed in the inventive molding resin composition is in the range, usually, from 0.01 to 0.5% by weight or, preferably, from 0.05 to 0.3% by weight based on the total amount of the components (A) and (B) depending on the types of the pigments and the desired degree of coloration. It is sometimes advantageous that the pigment is compounded in the resin composition together with a metal soap or surface active agent as a dispersing agent.

When the resin composition comprising the components (A) and (B) is desired to be colored by the admixture of a pigment, it is important that the component (B) dispersed in the form of particles in the matrix of the component (A) has transparency as high as possible or, preferably, has a light transmission of at least 50% as determined according to the procedure specified in JIS K 1105 or a haze value not exceeding 20%.

In the following, the thermoplastic resin-based molding composition of the invention is described in more detail by way of examples, in which the term of "parts" always refers to "parts by weight". In the examples, evaluation of the resin compositions and the shaped articles molded therefrom was according to the following procedures and criteria.

(1) Melt index MI: according to the procedure specified in ASTM D-1238

(2) HDT: according to the procedure specified in ASTM D-648 under a load of 18.6 kg/cm$^2$

(3) Density: according to the procedure specified in ASTM D-792

(4) Izod impact strength: according to the procedure specified in ASTM D-256

(5) Flexural yield strength: according to the procedure specified in ASTM D-790

(6) Molding shrinkage

A plate was prepared by injection molding of the resin composition using a one-end side-gate metal mold having dimensions of 420 mm (machine direction) × 100 mm × 2.5 mm and the machine-direction length $L_{MD}$ in mm of the plate was measured. The molding shrinkage, %, was calculated from the following equation:

$$\text{Molding shrinkage, \%} = (420 - L_{MD})/420 \times 100.$$

(7) Outer appearance

A plate sample of 420 mm × 100 mm × 2 mm dimensions prepared by injection molding of the resin composition was visually examined for the occurrence of flow marks and silver streaks and evaluated according to the following criteria.

A: absolutely no flow marks and silver streaks

B: few but not without flow marks and silver streaks

C: notable occurrence of flow marks and silver streaks

(8) Delamination

A pressure-sensitive cellophane-based adhesive tape was attached and bonded by pressing to the same injection-molded plate as prepared in (7) above at the portion around the gate and the tape was peeled off at a stretch to examine occurrence of delamination or separation into layers.

(9) Resistance against whitening by scratch

The surface of an injection-molded test piece of the composition having dimensions of 140 mm × 140 mm × 3 mm was scratched with the edge of a coin and the degree of whitening was visually evaluated in the following criteria.

A: absolutely no whitening

B: very little whitening

C: noticeable whitening
D: bad whitening
(10) Weld appearance

A test piece according to ASTM D-638 was prepared and conspicuousness of the center weld line was visually evaluated in the following criteria.

A: absolutely no weld line
B: very faint weld line
C: noticeable weld line
D: strong weld line
(11) Sink mark

A test piece having dimensions of $\frac{1}{4}$ inch × $\frac{1}{2}$ inch × 5 inches according to the ASTM for the test of HDT was prepared by injection molding and visually inspected for the sink mark appearing on the $\frac{1}{2}$ inch × 5 inches surface. The results were recorded according to the following criteria.

A: absolutely no sink mark
B: hardly noticeable sink mark
C: noticeable sink mark
D: very remarkable sink mark
(12) Surface condition

A test piece having dimensions of 420 mm × 100 mm × 2 mm was prepared by injection molding and the surface was visually inspected for granular appearance due to the particles of the component (B), i.e., polycarbonate resin. The results were recorded according to the following criteria.

A: absolutely no granular appearance
B: hardly noticeable granular appearance
C: noticeable granular appearance
D: very remarkable granular appearance
(13) Color development

The resin composition with admixture of 0.3% by weight of a brown pigment was kneaded and pelletized in an extruder machine and the pellets were injection-molded into a plate of which the degree of brown coloration was visually evaluated in three ratings of A for deep coloration, B for medium coloration and C for poor coloration.

(14) Color matching

The accuracy of color matching was given by the color difference $\Delta E^*_{ab}$ determined according to the procedure specified in JIS K 7105 between a dark blue reference plate and the colored sample plate and given according to JIS Z 8730 (CIE-976). Practically, a value of $\Delta E^*_{ab}$ smaller than 0.5 is required. The pigments used to exhibit dark blue color by blending included titanium dioxide, quinacridone magenta, phthalocyanine blue, carbon black and isoindolinone yellow and the pigments were used as a compound with 100 to 180% by weight of a metal soap.

Example 1.

Pellets of a resin composition were prepared, by blending at 200 °C in an extruder machine, 70 parts of a block-copolymeric polypropylene containing 6.5% by weight of ethylene moiety and having a melt index of 10 g/10 minutes (J-785H, a product by Idemitsu Petrochemical Co.) and 30 parts of a bisphenol A-type crystalline polycarbonate powder having a glass transition temperature of 154 °C and an average particle diameter of 500 µm. The temperature was sufficiently high to melt the block-copolymeric polypropylene but lower than the melting point of the polycarbonate resin. The pellets were injection-molded at 200 °C into a shaped body which was subjected to the various tests mentioned above to give the results shown in Table 1.

Example 2.

The experimental procedure was exactly the same as in Example 1 above except that the polycarbonate particles had an average particle diameter of 200 µm. The results of the evaluation tests are shown in Table 1.

Examples 3 to 6.

The experimental procedure in each of these examples was exactly the same as in Example 1 above except that the polycarbonate particles had an average particle diameter of 50 µm and the blending ratio of the polypropylene resin and the polycarbonate resin by weight was 70:30, 80:20, 92:8 and 60:40 in Examples 3, 4, 5 and 6, respectively. The results of the evaluation tests are shown in Table 1.

Comparative Example 1.

The experimental procedure was exactly the same as in Example 1 above except that the polycarbonate powder was replaced with the same amount of pellets of the same polycarbonate resin. Each pellet had a cylindrical shape with a diameter of about 3 mm and a height of about 3 mm. The blend of the polypropylene resin and the polycarbonate pellets could not be pelletized at 200 °C nor injection-molded.

Comparative Example 2.

The experimental procedure was exactly the same as in Example 1 above except that the polycarbonate powder was replaced with the same amount of pellets of the same polycarbonate resin and the compounding work of the resin composition and injection molding of the composition were each conducted at 280 °C at which both of the polypropylene and polycarbonate resins were in a molten state. The results of the evaluation tests are shown in Table 1.

Comparative Example 3.

The same block-copolymeric polypropylene resin as used in Example 1 alone was injection-molded under the same molding conditions. The results of the evaluation tests are shown in Table 1.

Comparative Example 4.

The experimental procedure was exactly the same as in Example 1 above except that the blending ratio of the polypropylene resin and the polycarbonate resin was 40:60 by weight. The results of the evaluation tests are shown in Table 1.

Comparative Example 5.

The experimental procedure was exactly the same as in Example 3 above except that the polycarbonate powder was replaced with the same amount of a calcium carbonate filler having an average particle diameter of about 3 µm. The results of the evaluation tests are shown in Table 1.

Table 1

| | | MI, g/10 minutes | HDT, °C | Delamination | Outer appearance | Density, $g/cm^3$ | Izod impact strength at 23 °C, kg•cm/cm |
|---|---|---|---|---|---|---|---|
| Example | 1 | 8 | 75 | No | B | 0.97 | 4 |
| | 2 | 8 | 77 | No | A | 0.97 | 5 |
| | 3 | 8 | 80 | No | A | 0.97 | 6 |
| | 4 | 9 | 74 | No | A | 0.94 | 7 |
| | 5 | 10 | 66 | No | A | 0.92 | 8 |
| | 6 | 6 | 87 | No | A | 1.0 | 3 |
| Comparative Example | 2 | 8 | 76 | Yes | C | 0.97 | 2 |
| | 3 | 10 | 60 | - | A | 0.9 | 9 |
| | 4 | 3 | 96 | No | B | 1.06 | 2 |
| | 5 | 8 | 68 | - | B | 1.13 | 6 |

Examples 7 to 11.

The experimental procedure in each of these examples was exactly the same as in Example 1 above excepting the different temperature conditions in compounding and injection molding and different formulations relative to the average aspect ratio of the particles and amount of the polycarbonate powders each having an average particle diameter of 50 µm including:
20 parts of crystalline resin particles having an average aspect ratio of 1.8 per 80 parts of the polypropylene in Example 7;
40 parts of crystalline resin particles having an average aspect ratio of 1.8 per 60 parts of the polypropylene in Example 8;
20 parts of crystalline resin particles having an average aspect ratio of 1.8 per 80 parts of the polypropylene in Example 9;
20 parts of crystalline resin particles having an average aspect ratio of 3.0 per 80 parts of the polypropylene in Example 10; and
20 parts of amorphous resin particles having an average aspect ratio of 1.8 per 80 parts of the polypropylene in Example 11.

The particle diameter mentioned above was determined and recorded as an average of the diameters along the major and minor axes of the particle.

The compounding work of the resin composition in each of these examples was conducted at 220 °C and the injection molding of the resin composition was conducted also at 220 °C in each of these examples excepting Example 9 in which the injection molding was conducted at 260 °C. The results of the evaluation tests are shown in Table 2.

Comparative Example 6.

The experimental procedure was exactly the same as in Example 1 except that the polypropylene resin alone was used without the polycarbonate resin and that the temperature in each of the compounding work and the injection molding of the resin composition was 220 °C instead of 200 °C. The results of the evaluation tests are shown in Table 2.

Table 2

| | | Flexural yield strength, $kg/cm^2$ | HDT, high, °C | Molding shrinkage, t=2.5 mm, % |
|---|---|---|---|---|
| Example | 7 | 470 | 94 | 1.1 |
| | 8 | 510 | 105 | 0.7 |
| | 9 | 469 | 94 | 1.1 |
| | 10 | 490 | 97 | 1.0 |
| | 11 | 465 | 93 | 1.1 |
| Comparative Example 6 | | 430 | 67 | 1.7 |

Example 12.

Pellets of a resin composition were prepared, by blending at 220 °C in an extruder machine, 90 parts of the same block-copolymeric polypropylene as used in Example 1 and 10 parts of a bisphenol A-type crystalline polycarbonate powder having an average particle diameter of 30 µm prepared by pulverization and particle size classification of a commercial product (FN-2200B, a product by Idemitsu Petrochemical Co.). The temperature was sufficiently high to melt the block-copolymeric polypropylene but lower than the melting point of the polycarbonate resin. The pellets were injection-molded at 220 °C into a shaped body which was subjected to the various tests mentioned above to give the results shown in Table 3.

Example 13.

The experimental procedure was exactly the same as in Example 12 except that 90 parts of the block-copolymeric polypropylene were replaced with a combination of 40 parts of the same block-copolymeric polypropylene, 40 parts of a homopolymeric polypropylene and 10 parts of a high-density polyethylene. The results of the evaluation tests are shown in Table 3.

Example 14.

The experimental procedure was exactly the same as in Example 12 except that 90 parts of the block-copolymeric polypropylene were replaced with a combination of 80 parts of the same homopolymeric polypropylene and 10 parts of the same high-density polyethylene each as used in Example 13. The results of the evaluation tests are shown in Table 3.

Example 15.

The experimental procedure was exactly the same as in Example 12 except that the weight ratio of the block-copolymeric polypropylene and the polycarbonate powder was 80:20 instead of 90:10. The results of the evaluation tests are shown in Table 3.

Example 16.

The experimental procedure was exactly the same as in Example 15 except that 80 parts of the block-copolymeric polypropylene were replaced with a combination of 70 parts of the same block-copolymeric polypropylene and 10 parts of the same high-density polyethylene as used in Example 13. The results of the evaluation tests are shown in Table 3.

Comparative Example 7.

The experimental procedure was exactly the same as in Example 16 excepting replacement of the polycarbonate powder with the same amount of the same polycarbonate pellets as used in Comparative Example 1. The results of the evaluation tests are shown in Table 3.

Comparative Example 8.

The experimental procedure was exactly the same as in Example 15 except that 80 parts of the block-copolymeric polypropylene resin were replaced with a combination of 40 parts of the same block-copolymeric polypropylene and 40 parts of the same high-density polyethylene as used in Example 13. The results of the evaluation tests are shown in Table 3.

Comparative Example 9.

The experimental procedure was exactly the same as in Example 16 except that the polycarbonate powder was replaced with the same amount of talc having an average particle diameter of about 2 μm. The results of the evaluation tests are shown in Table 3.

Table 3

| | | Density, $g/cm^3$ | MI, g/10 minutes | Izod impact strength, kg•cm/cm | HDT, low, °C | Molding shrinkage, t=2.5 mm, % | Resistance against whitening by scratch | Surface condition | Weld appearance | Sink mark | Flow mark | Color development |
|---|---|---|---|---|---|---|---|---|---|---|---|---|
| Example | 12 | 0.92 | 20 | 5 | 122 | 1.3 | A | B | A | B | A | A |
| | 13 | 0.92 | 18 | 6 | 122 | 1.3 | A | B | A | B | A | A |
| | 14 | 0.92 | 22 | 4 | 128 | 1.3 | A | B | A | B | A | A |
| | 15 | 0.95 | 17 | 4 | 130 | 1.1 | B | B | A | A | A | A |
| | 16 | 0.95 | 15 | 6 | 126 | 1.1 | A | B | A | A | A | A |
| Comparative Example | 7 | 0.95 | 17 | 6 | 126 | 1.1 | C | C | B | A | B | B |
| | 8 | 0.95 | 12 | 10 | 101 | 1.2 | A | B | B | A | C | A |
| | 9 | 1.04 | 16 | 10 | 124 | 1.1 | D | B | C | C | D | C |

Example 17.

The experimental procedure was exactly the same as in Example 4 except that the resin composition was further admixed with 0.11 part of a pigment blend composed of 7.5% by weight of quinacridone

magenta, 74.1% by weight of phthalocyanine blue and 18.4% by weight of carbon black and the compounding work and injection molding were conducted each at 220 °C. The pigments were introduced in the form of a blend with 100-180% by weight of a metal soap as a dispersing agent prepared beforehand. The results of the evaluation tests are shown in Table 4.

Example 18.

The experimental procedure was exactly the same as in Example 17 except that the polycarbonate powder had an average particle diameter of 100 µm instead of 50 µm and the amount of the pigment blend was increased to 0.14 part. The results of the evaluation tests are shown in Table 4.

Example 19.

The experimental procedure was exactly the same as in Example 17 except that the weight proportion of the polypropylene to the polycarbonate powder was 90:10 instead of 80:20 and the amount of the pigment blend was increased to 0.13 part. The results of the evaluation tests are shown in Table 4.

Comparative Example 10.

The formulation of the resin composition was the same as in Example 18 except that the amount of the pigment blend, which was composed of 1.8% by weight of titanium dioxide, 4.7% by weight of quinacridone magenta, 71.9% by weight of phthalocyanine blue and 21.6% by weight of carbon black, was increased to 0.64 part but the compounding work was conducted at 300 °C so that the polycarbonate particles could no longer retain the particulate configuration in the composition. The results of the evaluation tests are shown in Table 4.

Comparative Example 11.

The experimental procedure was exactly the same as in Comparative Example 10 except that the polycarbonate powder was replaced with the same amount of polycarbonate pellets. The results of the evaluation tests are shown in Table 4.

Comparative Example 12.

The experimental procedure was exactly the same as in Example 17 except that the polycarbonate powder was replaced with the same amount of talc and a pigment blend, which was composed of 17.0% by weight of titanium dioxide, 4.8% by weight of quinacridone magenta, 63.9% by weight of phthalocyanine blue and 14.3% by weight of carbon black, was used in an amount of 0.65 part. The results of the evaluation tests are shown in Table 4.

Comparative Example 13.

A colored resin composition was prepared by compounding 100 parts of the same polypropylene resin as used in Example 17 and 0.19 part of a pigment blend, which was composed of 42.8% by weight of titanium dioxide, 0.3% by weight of quinacridone magenta, 41.7% by weight of phthalocyanine blue and 15.2% by weight of carbon black, at 220 °C and injection-molding the composition also at 220 °C. The results of the evaluation tests are shown in Table 4.

Table 4

| | | Color matching, $\Delta E^{*}_{ab}$ | Density, $g/cm^3$ | MI, g/10 minutes | Molding shrinkage, t = 2.5 mm, % | HDT, high, °C |
|---|---|---|---|---|---|---|
| Example | 17 | 0.15 | 0.94 | 10 | 1.0 | 76 |
| | 18 | 0.20 | 0.94 | 10 | 1.1 | 75 |
| | 19 | 0.14 | 0.92 | 11 | 1.3 | 72 |
| Comparative Example ple | 10 | 0.20 | 0.94 | 6 | 1.1 | 75 |
| | 11 | 0.21 | 0.94 | 6 | 1.1 | 74 |
| | 12 | 0.17 | 1.04 | 9 | 1.1 | 75 |
| | 13 | 0.18 | 0.90 | 10 | 1.6 | 68 |

## Claims

**1.** A thermoplastic resin-based molding composition which comprises, as a blend:

(A) from 50 to 99 parts by weight of a block copolymer of ethylene and propylene of which the content of the ethylene moiety does not exceed 20% by weight; and

(B) from 50 to 1 part by weight of a polycarbonate resin, the ethylene-propylene block copolymer forming the matrix phase of the blend and the polycarbonate resin forming a phase dispersed in the matrix of the ethylene-propylene block copolymer in the form of discrete particles having an average particle diameter in the range from 0.1 to 1000 μm.

**2.** A thermoplastic resin-based molding composition as claimed in any preceding claim wherein the particles of the component (B) dispersed in the matrix phase of the component (A) have an average particle diameter in the range from 0.1 to 300 μm.

**3.** A thermoplastic resin-based molding composition as claimed in any preceding claim wherein the particles of the component (B) dispersed in the matrix phase of the component (A) have an average aspect ratio in the range from 1.0 to 10.

**4.** A thermoplastic resin-based molding composition as claimed in claim 3 wherein the particles of the component (B) dispersed in the matrix phase of the component (A) have an average aspect ratio in the range from 1.3 to 7.

**5.** A method for the preparation of a thermoplastic resin-based molding composition which comprises the steps of uniformly blending

(A) from 50 to 99 parts by weight of a block copolymer of ethylene and propylene of which the content of the ethylene moiety does not exceed 20% by weight; and

(B) from 50 to 1 part by weight of a polycarbonate resin in the form of a powder having an average particle diameter in the range from 0.1 to 1000 μm,

at a temperature at which the component (A) is melted but the component (B) is not melted so that the component (A) forms the matrix phase of the blend and the component (B) forms a phase dispersed in the matrix of the component (A) in the form of discrete particles having an average particle diameter in the range from 0.1 to 1000 μm.

**6.** A colored thermoplastic resin-based molding composition which comprises, as a blend:

(A) from 50 to 99 parts by weight of a block copolymer of ethylene and propylene of which the content of the ethylene moiety does not exceed 20% by weight;

(B) from 50 to 1 part by weight of a polycarbonate resin having transparency, and

(C) a colored pigment in an amount sufficient for coloration of the blend,

the component (A) forming the matrix phase of the blend and the component (B) forming a phase dispersed in the matrix of the component (A) in the form of discrete particles having an average particle

diameter in the range from 0.1 to 1000 µm.

7. A colored thermoplastic resin-based molding composition as claimed in claim 6 wherein the component (B) has a light transmission of at least 50% according to JIS K 1105.

8. Use of a thermoplastic resin-based molding composition as claimed in any one of claims 1 to 4 or 6, or when made by a method as claimed in claim 5, in the manufacture of molded articles of manufacture.

**Patentansprüche**

1. Formmasse (Formzusammensetzung) auf Basis eines thermoplastischen Harzes, die umfaßt bzw. enthält in Form einer Mischung:
   A) 50 bis 99 Gew.-Teile eines Ethylen-Propylen-Block-Copolymers, dessen Gehalt an Ethylen-Einheiten 20 Gew.-% nicht übersteigt; und
   B) 50 bis 1 Gew.-Teile eines Polycarbonatharzes,
   wobei das Ethylen-Propylen-Block-Copolymer die Matrix-Phase der Mischung bildet und das Polycarbonatharz eine in der Matrix aus dem Ethylen-Propylen-Block-Copolymer in Form von diskreten Teilchen mit einem durchschnittlichen Teilchendurchmesser in dem Bereich von 0,1 bis 1000 µm dispergierte Phase bildet.

2. Formmasse auf Basis eines thermoplastischen Harzes nach dem vorhergehenden Anspruch, worin die Teilchen aus der Komponente (B), die in der Matrix-Phase aus der Komponente (A) dispergiert sind, einen durchschnittlichen Teilchendurchmesser in dem Bereich von 0,1 bis 300 µm haben.

3. Formmasse auf Basis eines thermoplastischen Harzes nach irgendeinem vorhergehenden Anspruch, worin die Teilchen aus der Komponente (B), die in der Matrix-Phase aus der Komponente (A) dispergiert sind, ein durchschnittliches Aspektverhältnis in dem Bereich von 1,0 bis 10 haben.

4. Formmasse auf Basis eines thermoplastischen Harzes nach Anspruch 3, worin die Teilchen aus der Komponente (B), die in der Matrix-Phase aus der Komponente (A) dispergiert sind, ein durchschnittliches Aspektverhältnis in dem Bereich von 1,3 bis 7 haben.

5. Verfahren zur Herstellung einer Formmasse (Formzusammensetzung) auf Basis eines thermoplastischen Harzes, das umfaßt das gleichmäßige Mischen von
   A) 50 bis 99 Gew.-Teilen eines Ethylen/Propylen-Block-Copolymers, dessen Gehalt an Ethylen-Einheiten 20 Gew.-% nicht übersteigt, mit
   B) 50 bis 1 Gew.-Teilen eines Polycarbonatharzes in Form eines Pulvers mit einem durchschnittlichen Teilchendurchmesser in dem Bereich von 0,1 bis 1000 µm,
   bei einer Temperatur, bei der die Komponente (A) schmilzt, die Komponente (B) jedoch nicht schmilzt, so daß die Komponente (A) die Matrix-Phase der Mischung bildet und die Komponente (B) eine in der Matrix aus der Komponente (A) in Form von diskreten Teilchen mit einem durchschnittlichen Teilchendurchmesser in dem Bereich von 0,1 bis 1000 µm dispergierte Phase bildet.

6. Gefärbte Formmasse (Formzusammensetzung) auf Basis eines thermoplastischen Harzes, die in Form einer Mischung umfaßt bzw. enthält:
   A) 50 bis 99 Gew.-Teile eines Ethylen/Propylen-Block-Copolymers, dessen Gehalt an Ethylen-Einheiten 20 Gew.-% nicht übersteigt,
   B) 50 bis 1 Gew.-Teile eines Polycarbonatharzes, das transparent ist, und
   C) ein gefärbtes Pigment in einer zum Färben der Mischung ausreichenden Menge,
   wobei die Komponente (A) die Matrix-Phase der Mischung bildet und die Komponente (B) eine in der Matrix aus der Komponente (A) in Form von diskreten Teilchen mit einem durchschnittlichen Teilchendurchmesser in dem Bereich von 0,1 bis 1000 µm dispergierte Phase bildet.

7. Gefärbte Formmasse auf Basis eines thermoplastischen Harzes nach Anspruch 6, worin die Komponente (B) eine Lichtdurchlässigkeit von mindestens 50 % gemäß JIS K 1105 hat.

8. Verwendung einer Formmasse (Formzusammensetzung) auf Basis eines thermoplastischen Harzes nach einem der Ansprüche 1 bis 4 oder 6 oder hergestellt nach dem Verfahren nach Anspruch 5 zur

fabrikmäßigen Herstellung von Formkörpern.

## Revendications

1. Composition à mouler à base d'une résine thermoplastique qui comprend, en mélange :
   (A) 50 à 99 parties en poids d'un copolymère séquencé d'éthylène et de propylène dont la teneur en fragment d'éthylène ne dépasse pas 20% en poids ; et
   (B) 50 à 1 partie en poids d'une résine de polycarbonate,
   le copolymère séquencé d'éthylène-propylène formant la phase de la matrice du mélange et la résine de polycarbonate formant une phase dispersée dans la matrice du copolymère séquencé d'éthylène-propylène sous la forme de particules distinctes ayant un diamètre moyen compris entre 0,1 et 1 000 µm.

2. Composition à mouler à base d'une résine thermoplastique selon toute revendication précédente, où les particules du composant (B) dispersées dans la phase de la matrice du composant (A) ont un diamètre moyen de particule compris entre 0,1 et 300 µm.

3. Composition à mouler à base d'une résine thermoplastique selon toute revendication précédente, où les particules du composant (B) dispersées dans la phase de la matrice du composant (A) ont un rapport moyen d'aspect compris entre 1,0 et 10.

4. Composition à mouler à base d'une résine thermoplastique selon la revendication 3, où les particules du composant (B), dispersées dans la phase de la matrice du composant (A), ont un rapport moyen d'aspect compris entre 1,3 et 7.

5. Méthode de préparation d'une composition à mouler à base d'une résine thermoplastique qui comprend les étapes de mélanger uniformément :
   (A) 50 à 99 parties en poids d'un copolymère séquencé d'éthylène et de propylène dont la teneur en fragment d'éthylène ne dépasse pas 20% en poids ; et
   (B) 50 à 1 partie en poids d'une résine de polycarbonate sous la forme d'une poudre ayant un diamètre moyen de particule compris entre 0,1 et 1 000 µm,
   à une température à laquelle le composant (A) fond mais le composant (B) ne fond pas, de façon que le composant (A) forme la phase de la matrice du mélange et que le composant (B) forme une phase dispersée dans la matrice du composant (A) sous la forme de particules distinctes ayant un diamètre moyen compris entre 0,1 et 1 000 µm.

6. Composition à mouler à base d'une résine thermoplastique colorée qui comprend, en mélange :
   (A) 50 à 99 parties en poids d'un copolymère séquencé d'éthylène et de propylène dont la teneur en fragment d'éthylène ne dépasse pas 20% en poids ;
   (B) 50 à 1 partie en poids d'une résine de polycarbonate ayant une transparence et
   (C) un pigment coloré en une quantité suffisante pour la coloration du mélange,
   le composant (A) formant la phase de la matrice du mélange et le composant (B) formant une phase dispersée dans la matrice du composant (A) sous la forme de particules distinctes ayant un diamètre moyen compris entre 0,1 et 1 000 µm.

7. Composition à mouler à base d'une résine thermoplastique colorée selon la revendication 6, où le composant (B) a une transmission de la lumière d'au moins 50% selon JIS K 1105.

8. Utilisation d'une composition à mouler à base d'une résine thermoplastique selon l'une quelconque des revendications 1 à 4 ou 6, ou lorsqu'elle est produite par une méthode selon la revendication 5, dans la fabrication d'articles moulés.